# EUROPÄISCHE PATENTSCHRIFT

(11) **EP 1 560 735 B1**
(45) Veröffentlichungstag und Bekanntmachung des Hinweises auf die Patenterteilung: **13.09.2006**
(21) Anmeldenummer: 04728545.7
(22) Anmeldetag: 21.04.2004
(51) Int. Cl.: B60R 25/02

(54) **VORRICHTUNG ZUM SPERREN DER LENKSPINDEL EINES KRAFTFAHRZEUGS**
BLOCKING DEVICE FOR A MOTOR VEHICLE STEERING SHAFT
DISPOSITIF POUR VERROUILLER LA COLONNE DE DIRECTION D'UN VEHICULE A MOTEUR

(30) Priorität: 06.05.2003 DE 10320154
(43) Veröffentlichungstag der Anmeldung: 10.08.2005
(73) Patentinhaber: Huf Hülsbeck & Fürst GmbH & Co. KG, 42551 Velbert (DE)
(72) Erfinder: LIMBURG, Hans-Joachim, 85247 Schwabhausen (DE); ZILLMANN, Horst, 81243 München (DE)
(74) Vertreter: Oedekoven, Wolf Dieter
(86) Internationale Anmeldenummer: PCT/EP2004/004219
(87) Internationale Veröffentlichungsnummer: WO 2004/098960

(56) Entgegenhaltungen:
- WO-A-02/090152
- DE-A- 10 022 830
- DE-A- 10 133 408
- US-A- 4 643 009

## Beschreibung

Die Erfindung betrifft eine Vorrichtung zum Sperren der Lenkspindel eines Kraftfahrzeugs gegen Drehen mittels eines mit Sperrausnehmungen der Lenkspindel zusammenwirkenden Sperrbolzens, welcher mit Hilfe eines durch einen Elektromotor hin- und herdrehbaren und mit einem Drehstellungsdetektor zusammenwirkenden Steuergliedes zwischen einer Sperrstellung und einer Freigabestellung hin- und herschiebbar ist.

Solche Vorrichtungen zur Verriegelung der Lenkspindel eines Kraftfahrzeugs, so daß sie nicht mehr gedreht werden kann, sind in unterschiedlichen Ausgestaltungen bekannt.

Bei einer derartigen bekannten Vorrichtung zum Sperren der Lenkspindel eines Kraftfahrzeugs gegen Drehen weist das Steuerglied einen Exzenter auf, um mit dem durch eine Schraubendruckfeder in die Lenkspindel-Sperrstellung belasteten Sperrbolzen zusammenzuwirken, und ist das Steuerglied mit dem Ausgangszahnrad eines dem Elektromotor nachgeordneten Untersetzungsgetriebes drehfest verbunden. Die beiden Drehstellungen des Steuergliedes, welche jeweils der Lenkspindel-Sperrstellung bzw. der Lehkspindel-Freigabstellung des Sperrbolzens zugeordnet sind, werden mit Hilfe zweier berührungsloser Schalter oder zweier Mikroschalter festgestellt, mit denen das Ausgangszahnrad des Untersetzungsgetriebes zusammenwirkt und die zu einer elektronischen Steuerschaltung gehören, mit welcher der Elektromotor, eine bei nicht ordnungsgemäßer Bewegung des Sperrbolzens aus der Sperrstellung in die Freigabestellung wirksam werdende Alarmeinrichtung und die Zündung sowie der Anlasser des Kraftfahrzeugmotors gesteuert werden (US-A-4 643 009).

Bei einer anderen bekannten Vorrichtung zum Sperren der Lenkspindel eines Kraftfahrzeugs gegen Drehen der in Rede stehenden Art weist das Steuerglied eine schraubenlinienförmig verlaufende äußere Hubkurve zur Bewegung des Sperrbolzens auf, der sich parallel zur Drehachse des Steuergliedes erstreckt. Weiterhin weist das Steuerglied hinter dem der Lenkspindel abgewandten Ende des Sperrbolzens eine Umfangsverzahnung auf, in welche eine auf der Ausgangswelle des Elektromotors sitzende Schnecke eingreift. Neben der Umfangsverzahnung auf deren der Hubkurve und dem Sperrbolzen zugewandter Seite wirkt das Steuerglied mit einem elektrischen Endschalter zusammen, um das Steuerglied nach einer Umdrehung anzuhalten ( DE-A-100 22 830 ).

Bei zwei weiteren bekannten Vorrichtungen zum Sperren der Lenkspindel eines Kraftfahrzeugs gegen Drehen der eingangs angegebenen Gattung ist das Steuerglied mit einer schraubenlinienförmig verlaufenden inneren bzw. äußeren Hubkurve zur Bewegung des koaxial bzw. parallel zur Drehachse des Steuergliedes angeordneten Sperrbolzens und mit einer Umfangsverzahnung versehen, in welche eine auf der Ausgangswelle des Elektromotors sitzende Schnecke bzw. das Ausgangszahnrad eines dem Elektromotor nachgeordneten Stirnradgetriebes eingreift. Zwischen der Umfangsverzahnung und dem anderen Ende des Steuergliedes bzw. der äußeren Hubkurve des Steuergliedes sind um die Drehachse des Steuergliedes herum elektrische Endschalter bzw. Schaltelemente ( Schnapp- und / oder Mikroschalter ) zur Detektierung verschiedener Drehstellungen des Steuergliedes verteilt, welche mittels entsprechender Nocken am Steuerglied betätigt werden ( DE-A-101 33 408).

Zum Stand der Technik gehört ferner eine Vorrichtung zum Sperren der Lenkspindel eines Kraftfahrzeugs gegen Drehen mit einem Sperrbolzen, welcher zwischen einer Sperrstellung und einer Freigabestellung hin- und herschiebbar ist, und mit einem mittels eines Elektromotors hin- und herdrehbaren Steuerglied zur Axialverschiebung eines mit dem Sperrbolzen zusammenwirkenden Betätigungsbolzens in der einen oder in der anderen Richtung. Das Steuerglied umschließt den Betätigungsbolzen und weist zwei schraubenlinienförmig verlaufende innere Nuten auf, welche mit zwei einander bezüglich der Drehachse des Steuergliedes diametral gegenüberliegenden, radialen Vorsprüngen des Betätigungsbolzens zusammenwirken und jeweils an dem der Freigabestellung des Sperrbolzens zugeordneten Ende in eine Endfläche übergehen, die in einer zur Drehachse des Steuergliedes senkrechten Ebene liegt. Jede innere Nut des Steuergliedes geht über eine Zwischenfläche, welche in einer zur Drehachse des Steuergliedes senkrechten Ebene liegt, in die Endfläche der Nut über. Die beiden Zwischenflächen der inneren Nuten wirken mit den beiden Vorsprüngen des Betätigungsbolzens zusammen, wenn der Sperrbolzen eine erste Freigabestellung einnimmt, und die beiden Endflächen der inneren Nuten wirken mit den beiden Vorsprüngen des Betätigungsbolzens zusammen, wenn der Sperrbolzen über die erste Freigabestellung hinaus in eine zweite Freigabestellung verschoben worden ist. Es ist ein Schalter vorgesehen, der zur Erzeugung eines Signals, welches angibt, daß der Sperrbolzen die erste Freigabestellung einnimmt, mittels des Betätigungsbolzens betätigbar ist, während beim Drehen des Steuergliedes in der der Bewegung des Sperrbolzens in die zweite Freigabestellung zugeordneten Richtung die beiden Vorsprünge des Betätigungsbolzens von den beiden Zwischenflächen zu den beiden Endflächen der inneren Nuten des Steuergliedes laufen ( WO 02 / 090 152 A).

Der Erfindung liegt die Aufgabe zugrunde, eine Vorrichtung der eingangs angegeben Art zu schaffen, welche sich durch möglichst große Kompaktheit und somit möglichst geringen Platzbedarf auszeichnet.

Diese Aufgabe ist erfindungsgemäß durch die im kennzeichnenden Teil des Patentanspruchs 1 aufgeführten Merkmale gelöst. Vorteilhafte Ausgestaltungen der Vorrichtung nach der Erfindung sind in den restlichen Patentansprüchen angegeben.

Nachstehend ist eine bevorzugte Ausführungsform der erfindungsgemäßen Vorrichtung zum Sperren der Lenkspindel eines Kraftfahrzeugs gegen Drehen anhand von Zeichnungen beispielsweise beschrieben. Darin zeigt:
Fig. 1 den Längsschnitt entlang der Linie I-I in Fig. 2, wobei der Sperrbolzen sich in seiner Sperrstellung befindet;
Fig. 2 die Ansicht in Richtung des Pfeils II in Fig. 1 ohne Gehäuse, Gehäusedeckel sowie Leiterplatte und ohne Lenkspindel, und zwar in perspektivischer Darstellung;
Fig. 3 den Längsschnitt gemäß Fig. 1, wobei der Sperrbolzen sich in seiner Freigabestellung befindet;
Fig. 4 die Ansicht in Richtung des Pfeils IV in Fig. 3 ohne Gehäuse, Gehäusedeckel sowie Leiterplatte und ohne Lenkspindel, und zwar in perspektivischer Darstellung;
Fig. 5 eine perspektivische Ansicht der mit einer Spiralnut versehenen Seite der Steuerscheibe;
Fig. 6 eine perspektivische Ansicht der mit einer Spiralrippe versehenen Seite der Steuerscheibe.

Die dargestellte Vorrichtung zum Sperren der Lenkspindel 1 eines Kraftfahrzeugs gegen Drehen weist einen Sperrbolzen 2 auf, welcher mit nutenförmigen Sperrausnehmungen 3 einer auf der Lenkspindel 1 befestigten Sperrhülse 4 zusammenwirkt. Die Lenkspindel 1 und die Sperrhülse 4 sind von einem nicht wiedergegebenen Mantelrohr mit einer Durchgangsöffnung für den Sperrbolzen 2 umschlossen.

Der Sperrbolzen 2 weist einen rechteckigen Querschnitt auf und ist in einem Kanal 5 entsprechenden Querschnitts eines Gehäuses 6 axial verschieblich gelagert. Die beiden breiteren Seitenflächen 7, 8 des Kanals 5 erstrecken sich jeweils in einer zur gemeinsamen Längsachse 9 der Lenkspindel 1 und des dazu koaxialen Mantelrohres senkrechten Ebene. Das Gehäuse 6 ist auf der dem Kanal 5 fernen Seite mit einer durch einen Deckel 10 verschlossenen Montageöffnung 11 versehen und am Mantelrohr befestigt.

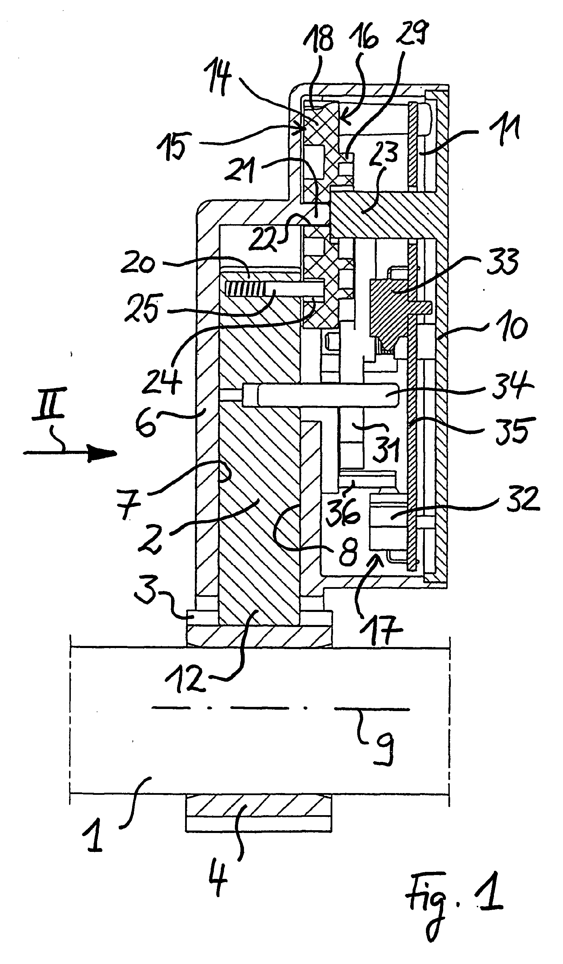

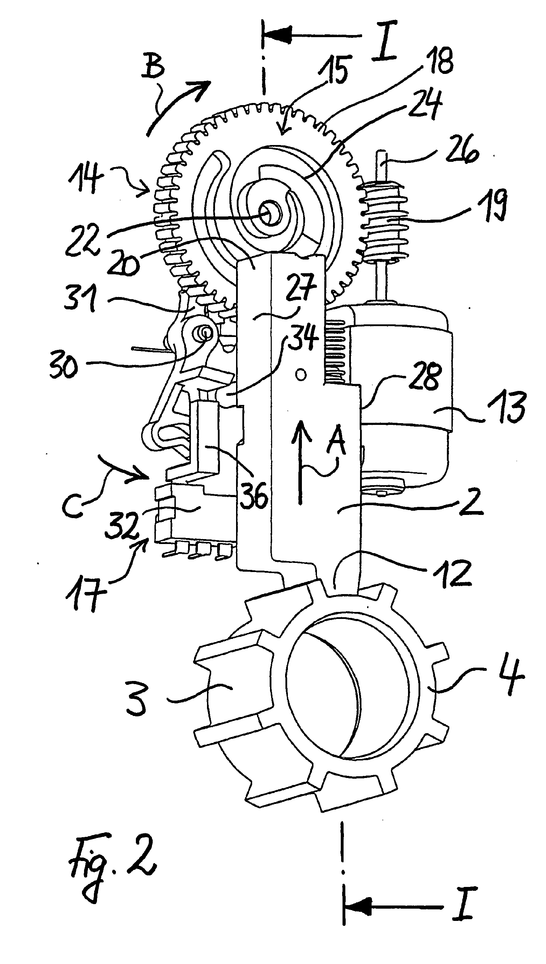

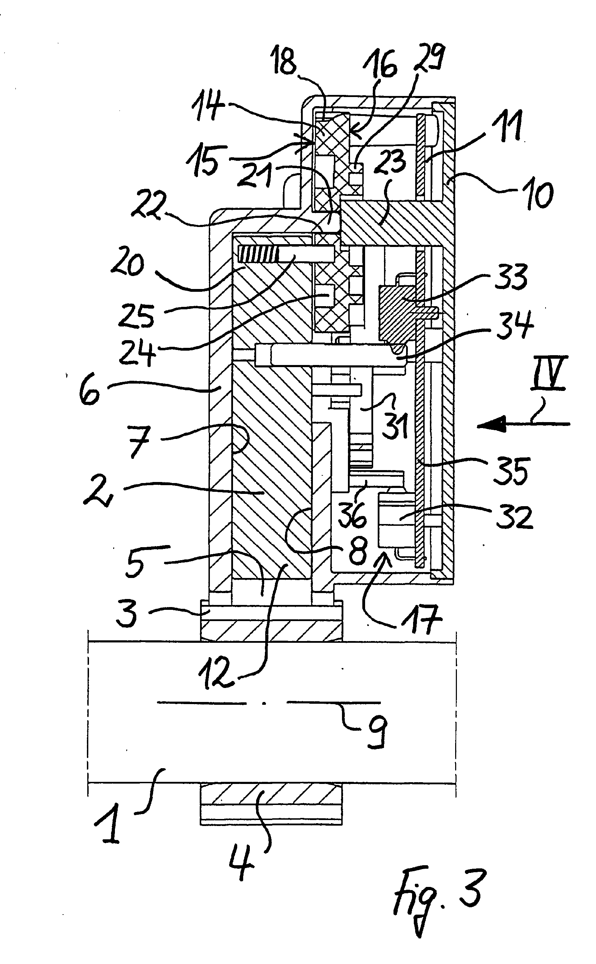

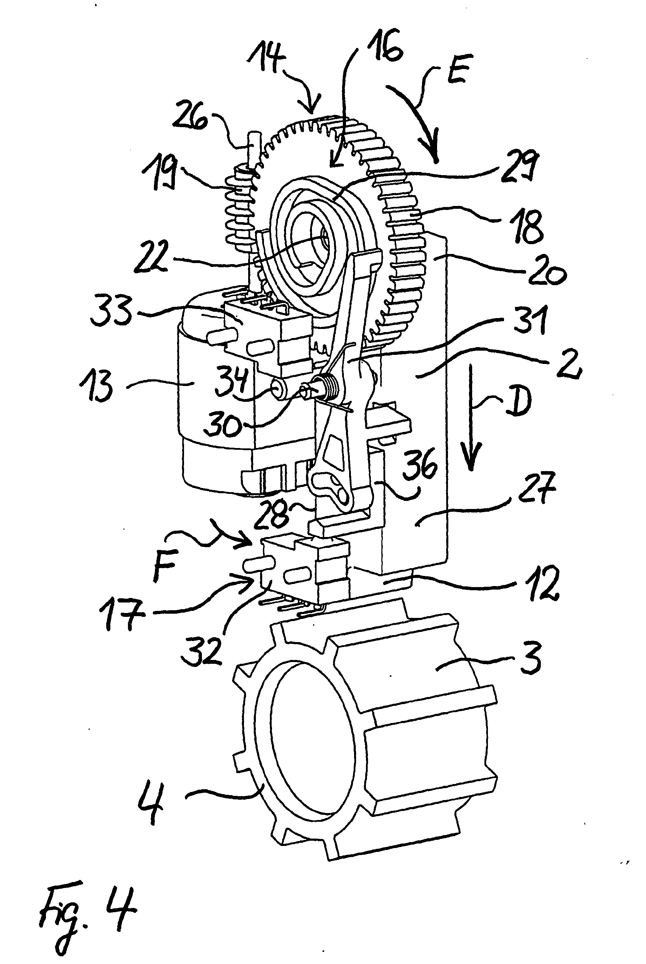

Der Sperrbolzen 2 ist zwischen der aus Fig. 1, 2 ersichtliche Sperrstellung, in welcher er mit seinem der Lenkspindel 1 zugewandten Ende 12 in eine Sperrausnehmung 3 der Sperrhülse 4 eingreift, so daß die Lenkspindel 1 nicht mehr gedreht werden kann, und der aus Fig. 3, 4 ersichtlichen Freigabestellung hin- und herbewegbar, in welcher der Sperrbolzen 2 mit dem Ende 12 in keine Sperrausnehmung 3 der Sperrhülse 4 eingreift und die Lenkspindel 1 freigibt, so daß sie gedreht werden kann.

Zur Axialverschiebung des Sperrbolzens 2 in die Freigabestellung und in der entgegengesetzten Richtung in die Sperrstellung dient eine mittels eines Elektromotors 13 mit umkehrbarer Drehrichtung hin- und herdrehbare, kreisrunde Steuerscheibe 14, welche auf der einen Seite 15 mit dem Sperrbolzen 2 und auf der anderen Seite 16 mit einem Drehstellungsdetektor 17 zusammenwirkt und eine Umfangsverzahnung 18 aufweist, in die eine vom Elektromotor 13 angetriebene Schnecke 19 eingreift.

Die Steuerscheibe 14 ist auf der dem Gehäusedeckel 10 zugewandten Seite des Sperrbolzens 2 neben dem der Lenkspindel 1 fernen Ende 20 des Sperrbolzens 2 angeordnet und im Gehäuse 6 auf einem zylindrischen Vorsprung 21 des Gehäuses 6 drehbar gelagert, welcher in eine mittige Lagerbohrung 22 der Steuerscheibe 14 eingreift und sich senkrecht zu den beiden breiteren Seitenflächen 7, 8 des den Sperrbolzen 2 führenden Kanals 5 des Gehäuses 6 erstreckt. Auf dem zylindrischen Vorsprung 21 kleineren Durchmessers ist die Steuerscheibe 14 durch einen zylindrischen Vorsprung 23 größeren Durchmessers des Gehäusedeckels 10 axial fixiert.

Auf der dem Sperrbolzen 2 benachbarten Seite 15 ist die Steuerscheibe 14 mit einer Spiralnut 24 versehen, welche sich um die Lagerbohrung 22 der Steuerscheibe 14 herumwindet und in welche ein vom Sperrbolzen 2 an seinem lenkspindelfernen Ende 20 seitlich abstehender, zylindrischer Stift 25 eingreift, so daß der Sperrbolzen 2 beim Drehen der Steuerscheibe 14 in der einen oder in der anderen Richtung radial zu der vom Gehäusevorsprung 21 definierten Drehachse der Steuerscheibe 14 in der einen bzw. in der anderen Richtung axial verschoben wird.

Die in die Umfangsverzahnung 18 der Steuerscheibe 14 eingreifende Schnecke 19 ist auf der Ausgangswelle 26 des Elektromotors 13 befestigt. Der Elektromotor 13 ist im Gehäuse 6 neben dem Sperrbolzen 2 angeordnet, so daß seine Ausgangswelle 26 sich parallel zu den beiden schmaleren Seitenflächen 27, 28 des Sperrbolzens 2 erstreckt.

Auf der dem Sperrbolzen 2 abgewandten Seite 16 ist die Steuerscheibe 14 mit einer vorstehenden Spiralrippe 29 versehen, welche sich um die Lagerbohrung 22 der Steuerscheibe 14 herumwindet und mit dem Drehstellungsdetektor 17 zusammenwirkt, nämlich über einen im Gehäuse 6 um eine zum Gehäusevorsprung 21 parallele Achse 30 verschwenkbaren, federbelasteten, zweiarmigen Schwenkhebel 31 mit einem elektrischen Schalter 32, um den Schalter 32 sowohl in der der Sperrstellung des Sperrbolzens 2 entsprechenden Drehstellung der Steuerscheibe 14 als auch in der der Freigabestellung des Sperrbolzens 2 entsprechenden Drehstellung der Steuerscheibe 14 zu betätigen. Ein weiterer elektrischer Schalter 33 wird von einem stiftförmigen seitlichen Vorsprung 34 des Sperrbolzens 2 betätigt, wenn der Sperrbolzen 2 seine Freigabestellung einnimmt. Die beiden elektrischen Schalter 32, 33 sind an einer im Gehäuse 6 befestigten, zum Gehäusedeckel 10 parallelen Leiterplatte 35 angeordnet.

Die Funktionsweise der geschilderten Vorrichtung zum Sperren der Lenkspindel 1 gegen Drehen ergibt sich besonders deutlich aus Fig. 2 und 4.

Um den Sperrbolzen 2 axial aus der Sperrstellung gemäß Fig. 2 in Richtung des Pfeils A in die Freigabestellung nach Fig. 4 zu verschieben, wird der Elektromotor 13 eingeschaltet, so daß seine Ausgangswelle 26 über die Schnecke 19 die Steuerscheibe 14 in Richtung des Pfeils B dreht und der Stift 25 des Sperrbolzens 2 sich in der Spiralnut 24 der Steuerscheibe 14 immer näher zur Drehachse ( Lagerbohrung 22 ) der Steuerscheibe 14 hih bewegt. Dabei verschwenkt die Spiralrippe 29 der Steuerscheibe 14 den Schwenkhebel 31 aus der Stellung gemäß Fig. 2 in Richtung des Pfeils C in die Stellung nach Fig. 4, um über' einen im Gehäuse 6 parallel zum Sperrbolzen 2 beweglichen Schieber 36 den elektrischen Schalter 32 auszuschalten und dann wieder einzuschalten, wenn der Sperrbolzen 2 seine Freigabestellung erreicht hat.

Um den Sperrbolzen 2 axial aus der Freigabestellung gemäß Fig. 4 in Richtung des Pfeils D in die Sperrstellung nach Fig. 2 zu verschieben, wird der Elektromotor 13 eingeschaltet, so daß seine Ausgangswelle 26 über die Schnecke 19 die Steuerscheibe 14 in Richtung des Pfeils E dreht und der Stift 25 des Sperrbolzens 2 sich in der Spiralnut 24 der Steuerscheibe 14 immer weiter von der Drehachse ( Lagerbohrung 22 ) der Steuerscheibe 14 weg bewegt. Dabei verschwenkt die Spiralrippe 29 der Steuerscheibe 14 den Schwenkhebel 31 aus der Stellung gemäß Fig. 4 in Richtung des Pfeils F in die Stellung nach Fig. 2, um über den Schieber 36 den elektrischen Schalter 32 auszuschalten und dann wieder einzuschalten, wenn der Sperrbolzen 2 seine Sperrstellung erreicht hat.

Die beiden elektrischen Schalter 32, 33 werden an eine elektrische oder elektronische Steuerschaltung angeschlossen, mit welcher beispielsweise der Elektromotor 13, eine bei nicht ordnungsgemäßer Bewegung des Sperrbolzens 2 aus der Sperrstellung in die Freigabestellung und / oder bei nicht ordnungsgemäßer Bewegung des Sperrbolzens 2 aus der Freigabestellung in die Sperrstellung wirksam werdende optische und / oder akustische Alarmeinrichtung, die Zündung und / oder der Anlasser des Motors des mit der Vorrichtung zum Sperren der Lenkspindel 1 gegen Drehen versehenen Kraftfahrzeugs etc. gesteuert werden.

Abwandlungen von der dargestellten und geschilderten Ausführungsform sind durchaus möglich. So muß die Steuerscheibe 14 nicht unbedingt mit Hilfe der Schnecke 19 angetrieben werden, sondern kann statt dessen auch ein vom Elektromotor 13 angetriebenes Ritzel in die entsprechend ausgebildete Umfangsverzahnung 18 der Steuerscheibe 14 eingreifen. Auch kann die Steuerscheibe 14 statt der Spiralnut 24 eine vorstehende Spiralrippe zum Zusammenwirken mit dem Sperrbolzen 2 und / oder statt der vorstehenden Spiralrippe 29 eine Spiralnut zum Zusammenwirken mit dem Drehstellungsdetektor 17 aufweisen oder auf ganz andere Weise auf der einen Seite 15 mit dem Sperrbolzen 2 und auf der anderen Seite 16 mit dem Drehstellungsdetektor 17 zusammenwirken. Der Drehstellungsdetektor 17 muß nicht unbedingt die der Sperrstellung und der Freigabestellung des Sperrbolzen 2 entsprechenden beiden Drehstellungen der Steuerscheibe 14 ermitteln, sondern kann irgendeine gewünschte Drehstellung oder irgendwelche gewünschten Drehstellungen der Steuerscheibe 14 feststellen. Auch kann der Drehstellungsdetektor 17 anders aufgebaut sein und aus anderen Komponenten bestehen, beispielsweise neben oder statt eines oder mehrerer Tastschalter, insbesondere Mikroschalter, einen oder mehrere Stellschalter oder berührungslose Schalter ( Magnetfeldsensoren, insbesondere Hallsensoren, Fotosensoren etc. ) aufweisen.

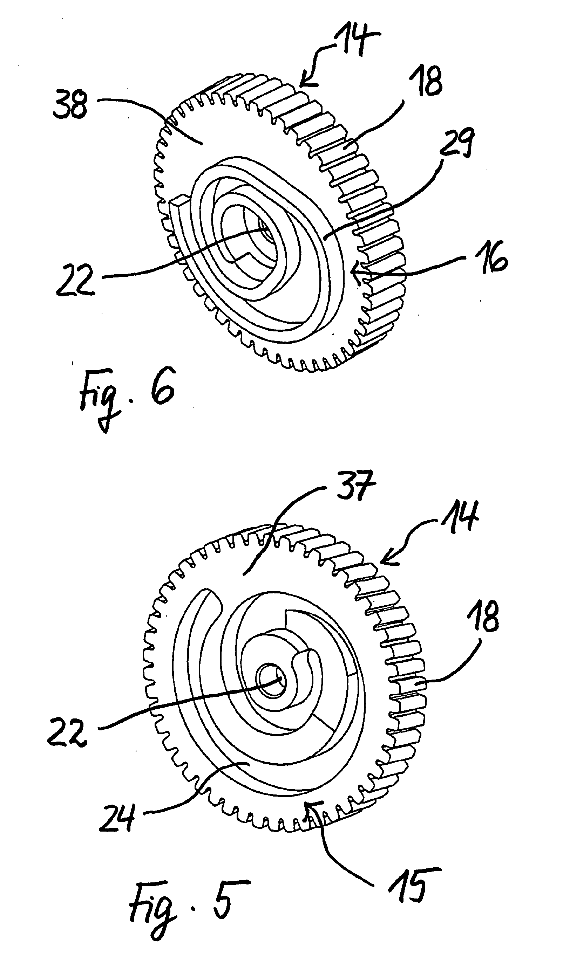

Die besonders deutlich aus Fig. 5, 6 ersichtliche Steuerscheibe 14 mit der Umfangsverzahnung 18 und den beiden ebenen, zueinander parallelen Oberflächen 37, 38 beiderseits der Umfangsverzahnung 18, nämlich auf der mit der vertieften Spiralnut 24 versehenen Seite 15 und auf der mit der vorstehenden Spiralrippe 29 versehenen Seite 16 der Steuerscheibe 14, ist verhältnismäßig dünn und erlaubt daher eine besonders gedrungene und entsprechend wenig Platz beanspruchende Ausbildung der Vorrichtung zum Sperren der Lenkspindel 1 gegen Drehen gemäß Fig. 1 bis 4. Der Abstand der Leiterplatte 35 vom Sperrbolzen 2 kann sehr gering sein und das Gehäuse 6 kann entsprechend schmal gehalten werden.

Darüber hinaus ermöglicht die Steuerscheibe 14 die Anordnung des Elektromotors 13 neben dem Sperrbolzen 2, so daß seine Ausgangswelle 26 mit der in die Umfangsverzahnung 18 der Steuerscheibe 14 eingreifenden Schnecke 19 parallel zum Sperrbolzen 2 verläuft, was im Hinblick auf möglichst geringe Abmessungen des Gehäuses 6 und somit der Vorrichtung zum Sperren der Lenkspindel 1 gegen Drehen gemäß Fig. 1 bis 4 ebenfalls günstig ist.

## Patentansprüche

1. Vorrichtung zum Sperren der Lenkspindel (1) eines Kraftfahrzeugs gegen Drehen mittels eines mit Sperrausnehmungen (3) der Lenkspindel (1) zusammenwirkenden Sperrbolzens (2), welcher mit Hilfe eines durch einen Elektromotor (13) hin- und herdrehbaren und mit einem Drehstellungsdetektor (17) zusammenwirkenden Steuergliedes zwischen einer Sperrstellung und einer Freigabestellung hin- und herschiebbar ist, **dadurch gekennzeich-net, daß** das Steuerglied als kreisrunde Steuerscheibe (14) ausgebildet ist, daß der Sperrbolzen (2) auf der einen Seite (15) und der Drehstellungsdetektor (17) auf der, anderen Seite (16) der Steuerscheibe (14) angeordnet sind und daß die Steuerscheibe (14) mit der dem Sperrbolzen (2) benachbarten Seite (15) auf den Sperrbolzen (2), und mit der dem Drehstellungsdetektor (17) benachbarten Seite (16) auf den Drehstellungsdetektor (17) einwirkt.

2. Vorrichtung nach Anspruch 1, **dadurch gekennzeichnet, daß** die Steuerscheibe (14) mit einer Umfangsverzahnung (18) für den Eingriff einer vom Elektromotor (13) angetriebenen Schnecke (19) oder eines vom Elektromotor (13) angetriebenen Ritzels versehen ist.

3. Vorrichtung nach Anspruch 1 oder 2, **dadurch gekennzeichnet, daß** der Sperrbolzen (2) radial zur Drehachse (21) der Steuerscheibe (14) hin- und herschiebbar ist.

4. Vorrichtung nach Anspruch 3 in Verbindung mit Anspruch 2, **dadurch ge-kennzeichnet, daß** der Elektromotor (13) neben dem Sperrbolzen (2) angeordnet ist und die in die Umfangsverzahnung (18) der Steuerscheibe (14) eingreifende Schnecke (19) auf der Ausgangswelle (26) des Elektromotors (13) befestigt ist, welche sich parallel zum Sperrbolzen (2) erstreckt.

5. Vorrichtung nach Anspruch 3 oder 4, **dadurch gekennzeichnet, daß** die Steuerscheibe (14) auf der dem Sperrbolzen (2) benachbarten Seite (15) eine Spiralnut (24) oder eine Spiralrippe aufweist, welche mit dem Sperrbolzen (2) zusammenwirkt und sich um die Drehachse (21) der Steuerscheibe (14) windet.

6. Vorrichtung nach einem der vorstehenden Ansprüche, **dadurch gekennzeichnet, daß** die Steuerscheibe (14) auf der dem Drehstellungsdetektor (17) benachbarten Seite (16) eine Spiralrippe (29) oder eine Spiralnut aufweist, welche mit dem Drehstellungsdetektor (17) zusammenwirkt und sich um die Drehachse (21) der Steuerscheibe (14) windet.

## Claims

1. Device for locking the steering shaft (1) of a motor vehicle against rotation by means of a locking bolt (2) which cooperates with locking recesses (3) of the steering shaft (1) and which can be displaced back and forth between a locking position and a release position with the aid of a control member that can be rotated back and forth by an electric motor (13) and which cooperates with a rotary position detector (17), **characterized in that** the control member is formed as a circular control disk (14), that the locking bolt (2) is disposed on one side (15) of the control disk (14) and the rotary position detector (17) is disposed on the other side (16) of the control disk (14) and that the control disk (14) acts with the side (15) adjacent to the locking bolt (2) on the locking bolt (2) and with the side (16) adjacent to the rotary position detector (17) on the rotary position detector (17).

2. Device according to claim 1, **characterized in that** the control disk (14) is provided with circumferential teeth (18) for the engagement of a worm (19), driven by the electric motor (13), or of a pinion, driven by the electric motor (13).

3. Device according to claim 1 or 2, **characterized in that** the locking bolt (2) can be displaced back and forth radially relative to the axis of rotation (21) of the control disk (14).

4. Device according to claim 3 in combination with claim 2, **characterized in that** the electric motor (13) is located next to the locking bolt (2), and the worm (19) that engages the circumferential teeth (18) of the control disk (14) is secured on the output shaft (26) of the electric motor (13), which shaft extends parallel to the locking bolt (2).

5. Device according to claim 3 or 4, **characterized in that** the control disk (14), on the side (15) adjacent to the locking bolt (2), has a spiral groove (24) or a spiral rib, which cooperates with the locking bolt (2) and winds around the axis of rotation (21) of the control disk (14).

6. Device according to any one of the foregoing claims, **characterized in that** the control disk (14), on the side (16) adjacent to the rotary position detector (17), has a spiral rib (29) or a spiral groove, which cooperates with the rotary position detector (17) and winds around the axis of rotation (21) of the control disk (14).

## Revendications

1. Dispositif pour verrouiller l'arbre de direction (1) d'un véhicule à moteur en vue d'empêcher sa rotation au moyen d'un goujon de verrouillage (2) coopérant avec des creux de verrouillage (3) de l'arbre de direction (1) et qui peut être déplacé en va-et-vient entre une position de verrouillage et une position de déverrouillage à l'aide d'un organe de commande pouvant être tourné en va-et-vient par un moteur électrique (13) et coopérant avec un détecteur de position de rotation (17), **caractérisé en ce que** l'organe de commande est conformé comme un disque de commande (14) circulaire, **en ce que** le goujon de verrouillage (2) est disposé sur un côté (15) du disque de commande (14) et le détecteur de position de rotation (17) sur l'autre côté (16) du disque de commande (14) et **en ce que** le disque de commande (14) agit par le côté (15) voisin du goujon de verrouillage (2) sur le goujon de verrouillage (2) et par le côté (16) voisin du détecteur de position de rotation (17) sur le détecteur de position de rotation (17).

2. Dispositif selon la revendication 1, **caractérisé en ce que** le disque de commande (14) est pourvu d'une denture de circonférence (18) destinée à se mettre en prise avec une vis sans fin (19) entraînée par le moteur électrique (13) ou un pignon entraîné par le moteur électrique (13) .

3. Dispositif selon la revendication 1 ou 2, **caractérisé en ce que** le goujon de verrouillage (2) peut être déplacé en va-et-vient dans le sens radial par rapport à l'axe de rotation (21) du disque de commande (14).

4. Dispositif selon la revendication 3 en relation avec la revendication 2, **caractérisé en ce que** le moteur électrique (13) est disposé à côté du goujon de verrouillage (2) et la vis sans fin (19) qui se met en prise sur la denture de circonférence (18) du disque de commande (14) est fixée sur l'arbre de sortie (26) du moteur électrique (13), qui s'étend parallèlement au goujon de verrouillage (2).

5. Dispositif selon la revendication 3 ou 4, **caractérisé en ce que** le disque de commande (14) présente du côté (15) voisin du goujon de verrouillage (2) une gorge en spirale (24) ou une nervure en spirale, qui coopère avec le goujon de verrouillage (2) et s'enroule autour de l'axe de rotation (21) du disque de commande (14).

6. Dispositif selon l'une quelconque des revendications précédentes, **caractérisé en ce que** le disque de commande (14) possède du côté (16) voisin du détecteur de position de rotation (17) une nervure en spirale (29) ou une gorge en spirale, qui coopère avec le détecteur de position de rotation (17) et s'enroule autour de l'axe de rotation (21) du disque de commande (14).
